# EUROPEAN PATENT APPLICATION

(11) **EP 2 357 832 A2**
(43) Date of publication of application: **17.08.2011**
(21) Application number: 10193444.6
(22) Date of filing: 02.12.2010
(51) Int. Cl.: H04N 13/00

(54) **Display device and display method thereof**

(30) Priority: 16.12.2009 KR 20090125334
(71) Applicant: SAMSUNG ELECTRONICS CO., LTD., Suwon-si Gyeonggi-do 442-742 (KR)
(72) Inventor: Bai, Young-jai, Gyeonggi-do (KR)
(74) Representative: Brandon, Paul Laurence

(57) **Abstract**

A display device has been disclosed. The display device comprises a signal receiving unit which receives an image signal, a display unit which displays images corresponding to the image signal on a screen including a first region and a second region, and a controlling unit which controls the display unit to display two-dimensional (2D) images on the first region and three-dimensional (3D) images on the second region together. Accordingly, since the 2D images and the 3D images can be displayed on the display unit together, the purchasing desires of consumers can be stimulated.

## Description

### CROSS-REFERENCE TO RELATED APPLICATIONS

This application claims priority from Korean Patent Application No. 10-2009-0125334, filed on December 16, 2009 in the Korean Intellectual Property Office, the disclosure of which is incorporated herein by reference in its entirety.

### BACKGROUND

### 1. Field

Apparatuses and methods consistent with the general inventive concept relate to a display device and a display method thereof, and more particularly, to a display device capable of displaying two-dimensional (2D) images and three-dimensional (3D) images together, and a display method thereof.

### 2. Description of the Related Art

Due to the recent developments in electronics technology, home-appliances including television (TV) devices are rapidly developing. Particularly, in the TV device sector, a new concept television broadcasting, three-dimensional Television (3DTV) technology, is rapidly developing. This is a technology of adding depth information to two-dimensional (2D) mono images, enabling television viewers to feel the audiovisual sense of the images, thereby providing them with a sensation of reality while viewing the images.

3DTV broadcasting technology is a technology of creating information that can be obtained in addition to 2D images when observed by both eyes using stereoscopic vision technology, thereby enabling viewers to feel a sensation of reality as if they were in the same place where the images have been created due to the additional information created.

Nowadays, installations using the 3D image technology have become so commonplace in large scale international expositions and exhibitions that they are regarded as necessities in those events, and thus viewers can enjoy beautiful stereoscopic images.

The effects of today's 3D images are so different from those of 2D images, that they make viewers stretch out their hands to grasp the 3D images in front of them, or unconsciously flinch to avoid the approaching 3D images.

Therefore, there is a need to seek a new display device and a display method thereof having advanced visual effects in order to stimulate the purchasing desires of consumers.

### SUMMARY

Exemplary embodiments of the general inventive concept address at least the above problems and/or disadvantages and other disadvantages not described above. Also, the general inventive concept is not required to overcome the disadvantages described above, and an exemplary embodiment of the general inventive concept may not overcome any of the problems described above.

Exemplary embodiments provide a display device which may display 3D images and 2D images together, and a display method thereof.

According to an aspect of an exemplary embodiment of the general inventive concept, there is provided a display device including a signal receiving unit which may receive an image signal, a display unit which may display images corresponding to the image signal on a screen including a first region and a second region, and a controlling unit which controls the display unit to display 2D images on the first region and 3D images on the second region together.

Each of the first region and the second region may constitute a separate frame.

The first region and the second region may constitute one frame.

The display device may further include a pre-processing unit which generates a frame including a left eye image and a right eye image, and a post-processing unit which three-dimensionally processes the generated frame, and provides the three-dimensionally processed frame to the display unit.

The post-processing unit may further include a 3D processing unit which generates a first image consisting of both the left eye image and the right eye image, and generates a second image by separating the left eye image from the right eye image and then combining one of the separated images of the left eye image and right eye image with a same separated image so that the second image consists of two identical images.

The post-processing unit may further include a frame rate controlling unit which increases the driving frequency by separating each of the left eye image from the right eye image in the first image and separating the two identical images in the second image, and then generating duplicated images by duplicating each of the separated images of the left eye image, the right eye image and the two identical images so that each of the separated images of the left eye image, the right eye image and the two identical images are repeated.

The post-processing unit may further include a timing controlling unit which controls the timing of the left eye image, the right eye image and the two identical images output to the display unit.

The frame rate controlling unit may include a first frame rate controlling unit which inserts the duplicated image identical to the left eye image and inserts the duplicated image identical to the right eye image so that the left eye image and the right eye image are repeated in the first image, and a second frame rate controlling unit which inserts the duplicated images identical to the two identical images so that the two identical images are repeated in the second image.

The timing controlling unit may include a first timing controlling unit which converts one the duplicated images of the left eye image and the right eye image output from the first frame rate controlling unit into black images thereby controlling the timing of the left eye and the right eye images output to the display unit, and a second timing controlling unit which converts the duplicated images of the two identical images output from the second frame rate controlling unit into black images, thereby controlling the timing of the two identical images output to the display unit.

The controlling unit may control the display unit to display 2D images on the first region and 3D images on the second region by combining the images of which the timings have been controlled.

According to an aspect of another exemplary embodiment, there is provided a display method of a display device including receiving an image signal, generating a display image corresponding to the image signal on a screen including a first region and a second region, and processing a 3D image signal so that the first region displays 2D images while the second region displays the 3D images.

Each of the first region and the second region may constitute a separate frame.

The first region and the second region may constitute one frame.

The display method of the display device may further include generating from the image signal a frame consisting of a left eye image and a right eye image, and 3D-processing the generated frame and providing the 3D-processed frame for the display unit.

The providing may further include generating a first image including both the left eye image and the right eye image and generating a second image by separating the left eye image from the right eye image in the first image, and then combining one of the separated images of the left eye image and the right eye image with a same separated image so that the second images consists of two identical images.

In addition, the providing may further include increasing the driving frequency by separating each of the left eye image from the right eye image in the first image and separating the two identical images in the second image, and then generating duplicated images by duplicating each of the separated images of the left eye image, the right eye image and the two identical images so that each of the separated images of the left eye image, the right eye image and the two identical images are repeated.

The providing may further include controlling the timing of the left eye image, the right eye image and the two identical images output to the display unit by eliminating one of the separated left eye image and the duplicated left eye image in the first image, eliminating one of the separated right eye image and the duplicated right eye image in the first image, and eliminating one of the separated and the duplicated images of each of the two identical images in the second images.

The raising the driving frequency may further include controlling a first frame rate by inserting the duplicated image identical to the left eye image and inserting the duplicated image identical to the right eye image so that the left eye image and the right eye image are repeated in the first image, and controlling a second frame rate by inserting the duplicated images identical to the two identical images so that the two identical images are repeated in the second image.

The controlling the timing may include controlling a first timing controlling unit to convert one of the separated left eye image and the duplicated left eye image in the first image into a black image, and converting one of the separated right eye image and the duplicated right eye image in the first image into another black image, thereby controlling the timing of the left eye and the right eye images output to the display unit, and controlling a second timing controlling unit to convert one of the separated and the duplicated images of each of the two identical images in the second image into black images, thereby controlling the timing of the two identical images output to the display unit.

The timing controlling may control the display unit to display 2D images on the first region and 3D images on the second region by combining the images of which the timings have been controlled.

Additional and/or other aspects and advantages of the general inventive concept will be set forth in part in the description which follows and, in part, will be obvious from the description, or may be learned by practice of the general inventive concept.

### BRIEF DESCRIPTION OF THE DRAWINGS

The above and/or other aspects of the general inventive concept will be more apparent by describing certain exemplary embodiments with reference to the accompanying drawings, in which:

FIG. 1 is a view illustrating a display device according to an exemplary embodiment of the general inventive concept;

FIGS. 2A to 2C are exemplified views of the display device displaying a 2D image and a 3D image together;

FIGS. 3 to 8 are views illustrating a display method of the display device; and

FIG. 9 is a flow chart of a display method according to an exemplary embodiment of the general inventive concept.

### DETAILED DESCRIPTION OF THE EXEMPLARY EMBODIMENTS

Certain exemplary embodiments of the general inventive concept will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the general inventive concept. Thus, it is apparent that the general inventive concept can be carried out without those specifically defined matters. Also, well-known functions or constructions are not described in detail since they would obscure the general inventive concept with unnecessary detail.

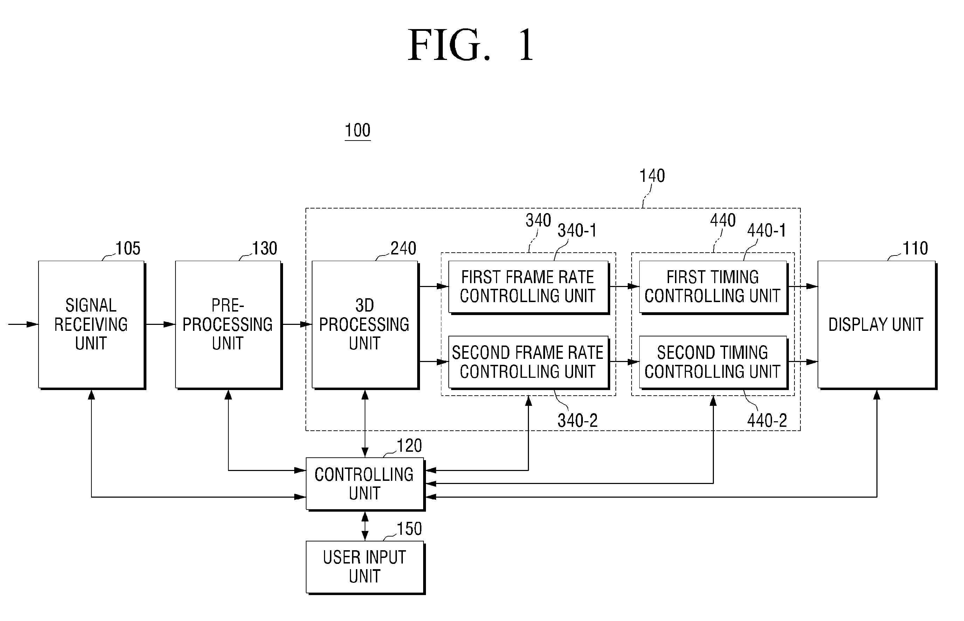

FIG. 1 is a view illustrating a display device according to an exemplary embodiment of the general inventive concept. With reference to FIG. 1, the display device 100 includes a signal receiving unit 105, a display unit 110, a controlling unit 120, a pre-processing unit 130, a post-processing unit 140, and a user input unit 150. Each unit may include at least one processor for performing the functions described below.

The signal receiving unit 105 receives an image signal. More specifically, the signal receiving unit 105 may include at least one signal receiving module (not illustrated), and receive at least one of a 2D image and a 3D image.

The display unit 110 may display either of or both the 2D image and the 3D image.

The display unit 110 may display a screen including a first region and a second region. The first region and the second region may be displayed in the form of a Double Window (DW) or a Picture In Picture (PIP).

The controlling unit 120 performs the overall controlling operations regarding constituent elements 110, 130, and 140. To be more specific, the controlling unit 120 may control the display unit 110 to display 2D images on the first region and to display 3D images on the second region. Furthermore, the controlling unit 120 may control the display unit 110 to display 2D images on the first region and 3D images on the second region by combining the images of which the timings have been controlled by the timing controlling unit 440 which will be explained hereafter.

The pre-processing unit 130 generates a frame including a left eye image and a right eye image.

The left eye image may be a 2D image, while the right eye image may be identical to the 2D image but one to which depth information has been added. Since the left eye image and the right eye image are slightly deviated from each other, the left eye image and the right eye image may be perceived as a 3D image in the viewer's eyes when a viewer wears glasses or the like for watching 3D images (e.g., shutter type glasses).

The pre-processing unit 130 may process the generated left eye image and the right eye image to be displayed in a side-by-side method or in a top-and-bottom method, but the general inventive concept is not limited thereto and thus other methods are also applicable.

The post-processing unit 140 three-dimensionally processes the generated frame, and provides the 3D-processed frame for the display unit 110. The post-processing unit 140 includes a 3D processing unit 240, a frame rate controlling unit 340, and the timing controlling unit 440.

The 3D processing unit 240 may generate first images consisting of both the left eye image and the right eye image, and generate second images by separating the left eye image from the right eye image and then combining each of the separated images with its own identical image so that each of the second images consists of two identical images.

The frame rate controlling unit 340 may increase the driving frequency by separating each left eye image from each right eye image in the first images and separating each of the two identical images from each other in the second images, and then combining each of the separated images with its own identical image so that each of the first images and the second images consist of two identical images.

The timing controlling unit 440 may control the timing of the images output to the display unit 110 by eliminating the inserted identical images.

The user input unit 150 receives a user command for displaying 2D images and 3D images together. To be more specific, according to the user command of the user input unit 150, a general broadcasting mode may be converted to a mode for displaying 2D images and 3D images together.

Meanwhile, in an exemplary case, the display unit 110 of the 3D image display device 100 may display the same image on the first region and the second region.

In such a case, if the image signal received by the signal receiving unit 105 is a 3D image signal, the 3D image display device 100 may generate 2D images and 3D images by the process of the pre-processing unit 130 and the post-processing unit 140, and then display the generated 2D images and 3D images on the display unit 110.

Alternatively, the 3D image display device 100 may receive 2D images and 3D images from at least one signal receiving module (not illustrated) of the signal receiving unit 105, and display the 2D images and the 3D images on the first region and the second region of the display unit 110.

In another exemplary case, the display unit 110 of the 3D image display device 100 may display different images on the first region and the second region.

In such a case, the 3D image display device 100 may receive 2D images and 3D images from a plurality of signal receiving modules (not illustrated) of the signal receiving unit 105, display the 2D images on the first region of the display unit 110, and display the 3D images on the second region of the display unit 110.

Alternatively, the 3D image display unit 100 may receive 3D images from the plurality of signal receiving modules (not illustrated) of the signal receiving unit 105, convert the 3D images received through a first signal receiving module (not illustrated) to 2D images and display the 2D images on the first region, and display the 3D images received through a second signal receiving module (not illustrated) on the second region.

Meanwhile, the 3D display device 100 may display an image received by the signal receiving unit 105 such that a portion of the image is displayed as a 2D image, and another portion is displayed as a 3D image. The 3D image display device 100 may also display two images received by the signal receiving unit 105 such that one is displayed as a 2D image and the other is displayed as a 3D image. Furthermore, regardless of whether one image or two images are received by the signal receiving unit 105, methods such as picture-in-picture (PIP), picture-outside-picture POP, picture-by-picture (PBP) methods may be applied to the image(s) when the 3D display device 100 displays the received image(s).

The 3D image display device 100 according to an exemplary embodiment of the general inventive concept may be a TV device or a personal computer (PC) monitor which is capable of generating and processing 3D images, and displaying the processed images.

In addition, according to another exemplary embodiment of the general inventive concept, there may be provided a display system which processes the aforementioned operations in a set top box (STB), and then simply displays the images processed in the 3D image display device 100.

The 3D image display device 100 may perform the aforementioned operations after a user control command for conversion to a demonstration (demo) mode is input to the user input unit 150 through a remote control.

Accordingly, the display device 100 may display 2D images and 3D images on the display unit 110 together, thereby stimulating the purchasing desires of consumers.

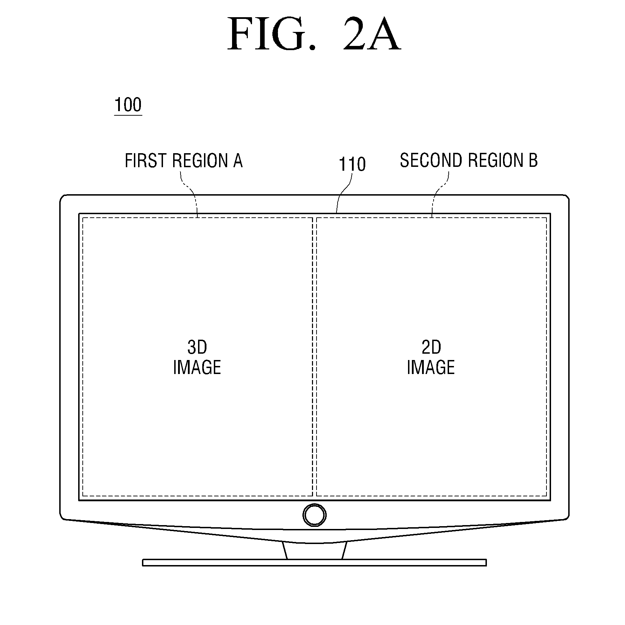

FIGS. 2A-2C are views which exemplify the display device displaying 2D images and 3D images together.

With reference to FIGS. 2A to 2C, the display unit 110 of the display device 100 includes the first region A and the second region B arranged in a left-right double window.

Referring to FIG. 2A, the display device 100 displays 3D images on the first region A and 2D images on the second region B of the display unit 110. Alternatively, the 2D images may be displayed on the first region A, while the 3D images are displayed on the second region B. Furthermore, the 2D and the 3D images may be displayed in the form of a top-bottom double window, instead of a left-right double window.

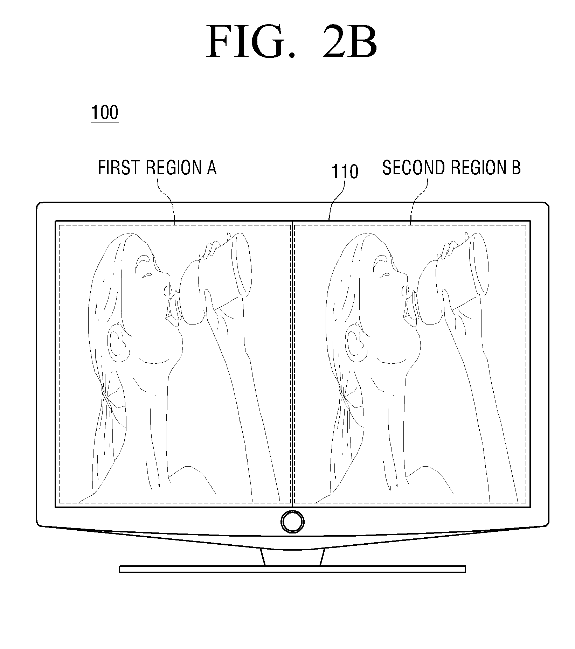

According to an exemplary embodiment of the general inventive concept illustrated in FIG. 2B, each of the first region A and the second region B may constitute a separate frame. That is, an identical broadcast image (program) may be broadcasted on each of the first region A and the second region B, but as 2D images on the first region A and 3D images on the second region B.

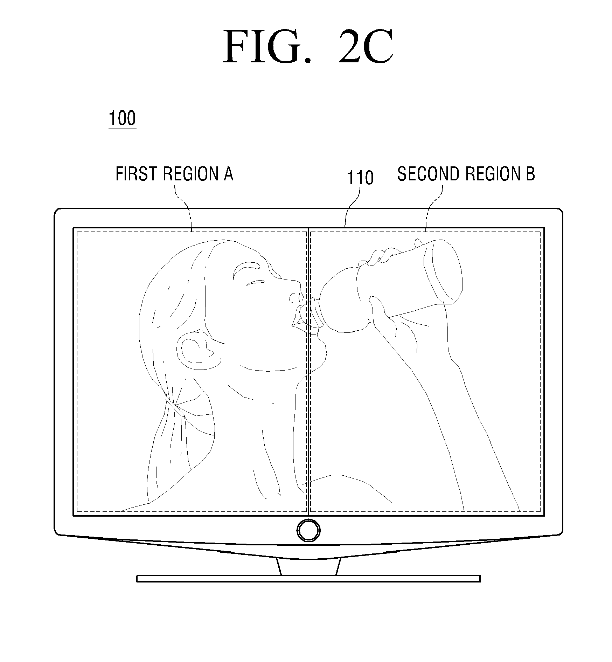

According to another exemplary embodiment of the general inventive concept illustrated in FIG. 2C, the first region A and the second region B may constitute one frame. That is, an identical broadcast image (program) may be broadcasted on the entire display unit 110 which includes the first region A and the second region B, but as 2D images on the first region A and 3D images on the second region B.

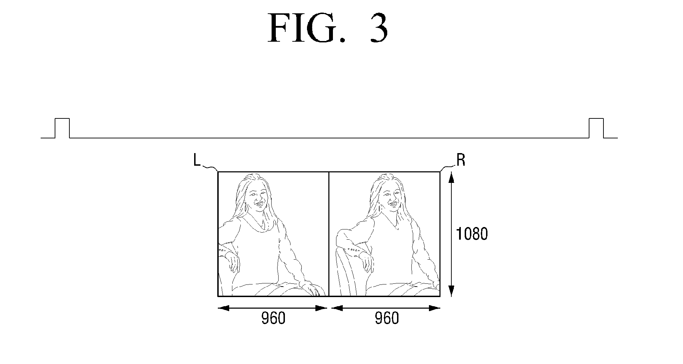

FIGS. 3 to 8 are views for explaining the display method of the display device. Hereinafter, images having reference numeral 'L' are identical images regardless of the subscripts (1, 2, 3, 4, 5, 6) added to reference numeral 'L', and images having reference numeral 'R' are different from the images having reference numeral 'L'. Similarly, images having reference numeral 'R' are identical images regardless of the subscripts (1, 2, 3, 4, 5, 6) added to reference numeral 'R'.

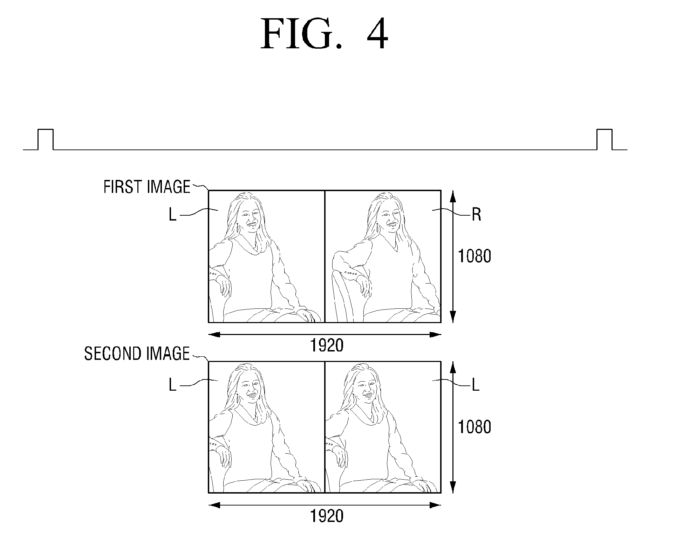

FIG. 3 illustrates a frame which is input to the 3D processing unit 240. FIG. 4 illustrates one frame, but since the driving frequency of the frame input to the 3D processing unit 240 is 60 Hz, the frame is repeated 60 times at a second. As illustrated in FIG. 3, the left eye image L and the right eye image R may be different images having deviations from each other.

FIG. 4 illustrates data separation and inserting operation performed in the 3D processing unit 240.

The first image of the 3D processing unit 240 may be identical to the image received in the 3D processing unit 240. That is, the first image may be the image of the left eye image L and the right eye image R combined.

The second image of the 3D processing unit 240 may be generated by separating the left eye image L from the right eye image R in the first image and then combining the separated left eye image L with an identical left eye image L so that the second image consist of two identical left eye images.

Alternatively, the second image of the 3D processing unit 240 may be generated by separating the left eye image L from the right eye image R in the first image and then combining the separated right eye image R with an identical right eye image R so that the second image consist of two identical right eye images.

Herein, each of the separated left eye image L and the right eye image R may measure 960 pixels X 1080 lines.

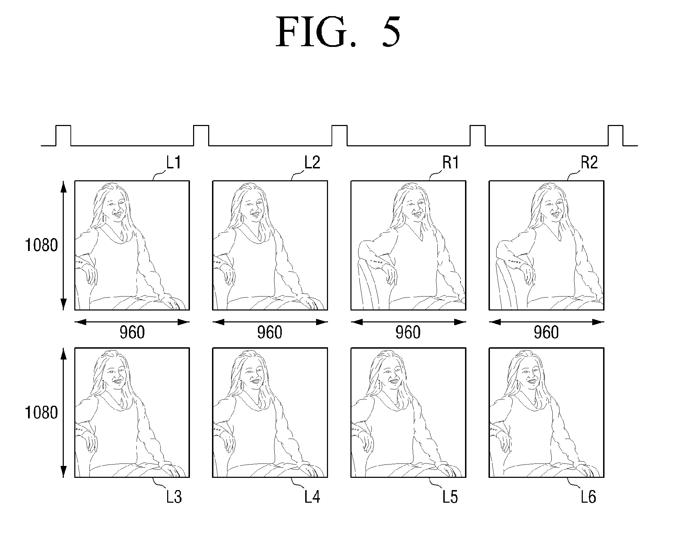

FIG. 5 illustrates the frame rate control operation. With reference to FIG. 5, in the first frame rate controlling unit 340-1, the left eye image L and the right eye image R in the first image are separated from each other, and each of the separated images is combined with an identical image of itself so that the same image is repeated. In other words, each separated image is duplicated so that the separated images are repeated to increase the frame rate.

In addition, the second frame rate controlling unit 340-2 also performs the same operation as the first frame rate controlling unit 340-1, but with respect to the two identical images of the second image. For example, the two identical left eye images (or the two identical right eye images) that make up the second image are separated from each other, and then each of the separated images are duplicated so that the separated images are repeated.

However, the first frame rate controlling unit 340-1 generates the left eye image L1, the left eye image L2, the right eye image R1, and the right eye image R2, wherein the left eye image L1 is identical to the left eye image L2, and the right eye image R1 is identical to the right eye image R2, whereas the four images (L3, L4, L5, and L6) generated by the second frame rate controlling unit 340-2 are all the same.

Accordingly, images are inserted in the video stream by the first frame rate controlling unit 340-1 and the second frame rate controlling unit 340-2 to increase the driving frequency of the frame. When the driving frequency of the frame is increased by the frame rate controlling unit 340, the controlling unit 120 may finally control the panel of the display unit 110 to operate at a high speed. Accordingly, occurrence of flickers may be reduced.

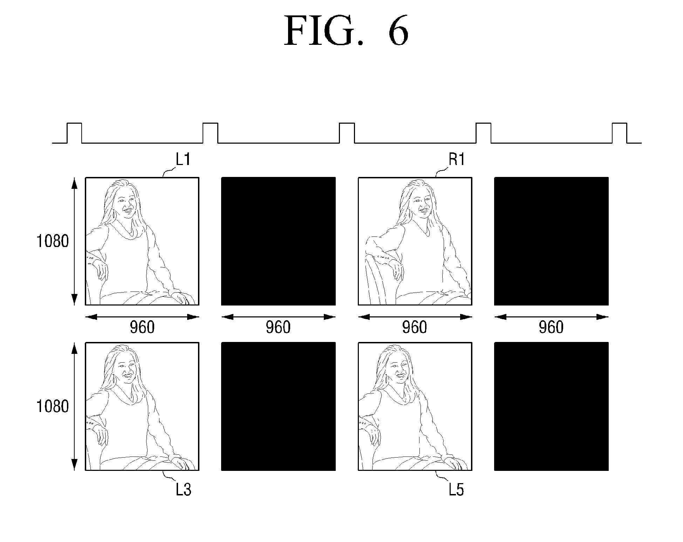

FIG. 6 illustrates the operation of a black image being inserted (converted). With reference to FIG. 6, the first timing controlling unit 440-1 eliminates one image (e.g., L2 and R2) of each repeated image set (L1, L2 and R1, R2) of the images (L1, L2, R1, R2) output from the first frame rate controlling unit 340-1. To be more specific, a black image may be inserted as one of the images (e.g., L2 and R2) of the repeated image sets (L1, L2 or R1, R2) thereby replacing the repeated image, or one of the images (e.g., L2 and R2) of the repeated image sets (L1, L2 or R1, R2) may be converted to a black image.

Eventually, the image L1, a black image, the image R1, and a black image may be output in the first timing controlling unit 440-1 sequentially. Similarly, the image L3, a black image, the image L5, and a black image may be output in the second timing controlling unit 440-2 sequentially.

Accordingly, a black image is inserted by the timing controlling unit 440 to eliminate cross talk caused by the delay of liquid time of the panel which occurs when turning on/off the panel of the display unit 110.

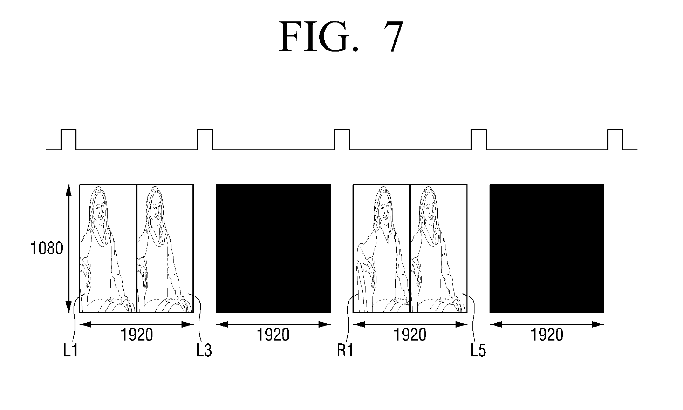

FIG. 7 illustrates the operation of generating a frame finally output from the timing controlling unit to the display unit.

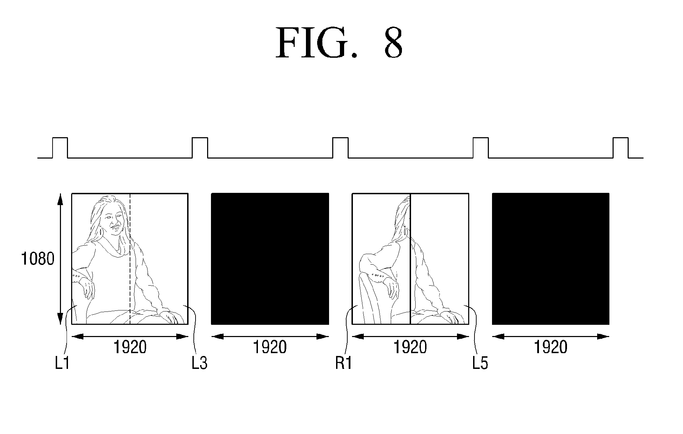

With reference to FIGS. 7 and 8, the first and second exemplary embodiment of the general inventive concept will now be explained.

Depending on the method of combining images in the timing controlling unit 440, the exemplary embodiment of FIGS. 7 and 2B or the exemplary embodiment of FIGS. 8 and 2C may be derived.

First, with reference to FIGS. 7 and 2B, an exemplary embodiment of the general inventive concept will now be explained. In a case when the images L1, L3 are combined so that the image L1 of the first timing controlling unit 440-1 is displayed on the first region A and the image L3 of the second timing controlling unit 440-2 is displayed on the second region B.

In this case, since the image L1 and the image R1, which are different from each other, are displayed repeatedly on the first region A of the display unit 110, the first region A may be displayed as a 3D image, while since identical images L3, L5 are displayed repeatedly on the second region B of the display unit 110, the second region B is displayed as a 2D image.

Accordingly, it is possible to provide visual effects of 3D images to consumers, thereby stimulating their purchasing desires.

Next, another exemplary embodiment of the general inventive concept will now be explained with reference to FIGS. 8 and 2C. According to the timing controlling unit 440, which is controlled by the controlling unit 120, the first region A and the second region B constitute one frame, and only the first region A can display 3D images. That is, an identical broadcast image (program) may be broadcasted on the entire display unit 110 which includes the first region A and the second region B, but as 2D images on the first region A and 3D images on the second region B. Since the image L1 and the image R1 which are different from each other are displayed repeatedly on the first region A of the display unit 110, the first region A may be displayed as a 3D image, while since identical images L3, L5 are displayed repeatedly on the second region B of the display unit 110, the second region B is displayed as a 2D image.

Accordingly, it is possible to provide visual effects of 3D images to consumers, thereby stimulating their purchasing desires.

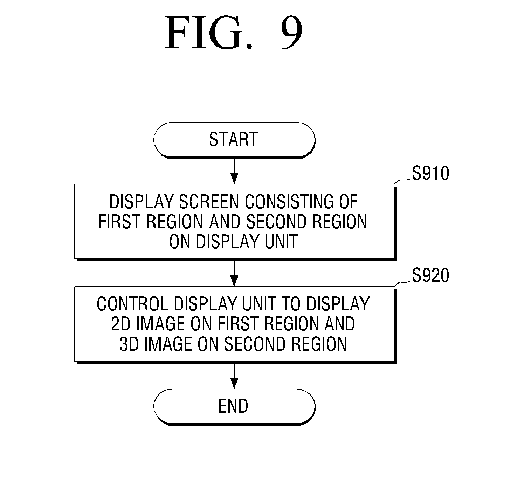

FIG. 9 is a flow chart illustrating the display method of the display device according to an exemplary embodiment of the general inventive concept. With reference to FIG. 8, the display device displays a screen including the first region and the second region on the display unit 110 (S910).

Thereafter, the controlling unit 120 controls the display unit 110 to display the 2D images on the first region and the 3D images on the second region (S920).

In this case, each of the first region and the second region may constitute a separate frame.

Alternatively, the first region and the second region may constitute one frame.

Furthermore, the display method of the display device may further include generating by the pre-processing unit 130 a frame consisting of a left eye image and a right eye image, and 3D-processing by the post-processing unit 140 the generated frame and providing the 3D-processed frame for the display unit 110.

Accordingly, the display method of the display device 100 may display 2D images and 3D images on the display unit 110 together, thereby stimulating purchasing desires of consumers.

The foregoing exemplary embodiments and advantages are merely exemplary and are not to be construed as limiting the general inventive concept. The present teaching can be readily applied to other types of apparatuses. Also, the description of the exemplary embodiments of the general inventive concept is intended to be illustrative, and not to limit the scope of the claims, and many alternatives, modifications, and variations will be apparent to those skilled in the art.

## Claims

1. A display device comprising:
a signal receiving unit which receives an image signal;
a display unit which displays a screen comprising a first region and a second region; and
a controlling unit which controls the display unit to display a 2D image on the first region while displaying a 3D image on the second region together.

2. The display device as claimed in claim 1, wherein each of the first region and the second region constitutes a separate frame.

3. The display device as claimed in claim 1, wherein the first region and the second region constitute one frame.

4. The display device as claimed in claim 1, further comprising:
a pre-processing unit which generates a frame comprising a left eye image and a right eye image; and
a post-processing unit which three-dimensionally processes the generated frame and provides the three-dimensionally processed frame to the display unit.

5. The display device as claimed in claim 4, wherein the post-processing unit further comprises:
a 3D processing unit which generates a first image comprising both the left eye image and the right eye image and generates a second image by separating the left eye image from the right eye image in the first image and then combining each of the separated images with its identical image so that each of the second images consists of two identical images;
a frame rate controlling unit which increases the driving frequency by separating the left eye image from the right eye image in the first image and separating the two identical images in the second image, and then duplicating each of the separated images so that each of the separated images of the left eye image, the right eye image and the two identical images are repeated by a duplicated image; and
a timing controlling unit which controls the timing of the left eye image, the right eye image and the two identical images output to the display unit by eliminating the duplicated images.

6. The display device as claimed in claim 5, wherein the frame rate controlling unit comprises:
a first frame rate controlling unit which inserts the duplicated image identical to the left eye image and inserts the duplicated image identical to the right eye image so that the left eye image and the right eye image are repeated in the first image; and
a second frame rate controlling unit which inserts the duplicated images identical to the two identical images so that the two identical images are repeated in the second image.

7. The display device as claimed in claim 6, wherein the timing controlling unit comprises:
a first timing controlling unit which converts the duplicated images output from the first frame rate controlling unit into black images, thereby controlling the timing of the images output to the display unit; and
a second timing controlling unit which converts duplicated images output from the second frame rate controlling unit into black images, thereby controlling the timing of the images output to the display unit.

8. The display device as claimed in claim 5, wherein the controlling unit controls the display unit to display the 2D images on the first region and the 3D images on the second region.

9. A display method of the display device comprising:
receiving an image signal;
generating a screen comprising a first region and a second region; and
processing 3D images so that the first region displays 2D images and the second region displays 3D images together.

10. The display method as claimed in claim 9, wherein each of the first region and the second region constitutes a separate frame.

11. The display method as claimed in claim 9, wherein the first region and the second region constitute one frame.

12. The display method as claimed in claim 9, further comprising:
generating a frame comprising a left eye image and a right eye image; and
three-dimensionally processing the generated frame and providing the three-dimensionally processed frame for the display unit.

13. The display method as claimed in claim 12, wherein the providing further comprises:
generating a first image comprising both the left eye image and the right eye image and generating a second image by separating the left eye image from the right eye image in the first image and then combining one of the separated images with its identical image so that the second image consists of two identical images;
increasing the driving frequency by separating each of the left eye image from the right eye image in the first image and separating the two identical images in the second image, and then duplicating each of the separated images so that each of separated images of the left eye image, the right eye image and the two identical images are repeated by a duplicated image; and
controlling the timing of the left eye image, the right eye image and the two identical images output to the display unit by eliminating the duplicated images.

14. The display method as claimed in claim 13, wherein the raising the driving frequency comprises:
controlling a first frame rate inserting the duplicated image identical to the left eye image and inserting the duplicated image identical to the right eye image so that the left eye image and the right eye image are repeated in the first image; and
a second frame rate controlling which inserts the duplicated images identical to the two identical images so that the two identical images are repeated in the second image.

15. The display method as claimed in claim 13, further comprising:
a first timing controlling which converts one of the separated and the duplicated images in the first image into a black image, thereby controlling the timing of the images output to the display unit; and
a second timing controlling unit which converts one of the separated and the duplicate images in the second images into a black image, thereby controlling the timing of the images output to the display unit.
